# EUROPEAN PATENT SPECIFICATION

(11) **EP 3 780 874 B1**
(45) Date of publication and mention of the grant of the patent: **07.05.2025**
(21) Application number: 20195183.7
(22) Date of filing: 24.03.2014
(51) Int. Cl.: H04W 74/0808, H04W 52/24, H04L 1/00, H04W 52/38

(54) **STATION AND METHOD FOR OPERATING THE STATION**
STATION UND VERFAHREN ZUM BETRIEB DER STATION
STATION ET PROCÉDÉ DE FONCTIONNEMENT DE LA STATION

(43) Date of publication of application: 17.02.2021
(62) Divisional of application: 14714633.6
(73) Proprietor: Huawei Technologies Co., Ltd., Longgang District Shenzhen, Guangdong 518129 (CN)
(72) Inventor: SHILO, Shimon, 80992 Munich (DE); WEITZMAN, Avi, 80992 Munich (DE); EZRI, Doron, 80992 Munich (DE); RUAN, Wei, 80992 Munich (DE); SUN, Fuqing, 80992 Munich (DE); FAN, Ronghu, 80992 Munich (DE)
(74) Representative: Gill Jennings & Every LLP

(56) References cited:
- EP-B1- 2 915 382
- WO-A2-2007/027442
- US-A1- 2013 017 794
- US-B1- 8 483 741

## Description

### TECHNICAL FIELD

The present application relates to the field of wireless data transmission, and particularly to a station and a method for operating the station.

### BACKGROUND

In an IEEE 802.11 network, a station uses the Clear Channel Assessment (CCA) mechanism to determine if the channel is busy during Carrier Sensing Multiple Access/Collision Avoidance (CSMA/CA) and back-off processes. If the channel is deemed to be busy, the station refrains from transmitting any data, until the channel is free for a pre-defined period.

The IEEE 802.11 standard supports three basic topologies and two operating modes. The three basic topologies are: At first, Independent Basic Service Set (IBSS) - also referred to as ad-hoc networks. IBSS includes a number of stations that communicate directly with one another on an ad-hoc, peer-to-peer basis. Thus it contains a set of stations that communicate directly with one another not requiring an access point (AP) or any connection to a wired network. Secondly, Basic Service Set (BSS) - consists of at least one AP connected to the wired network infrastructure and a set of stations.

Communication between stations (if applicable) flows via the AP. Thirdly, extended Service Set (ESS) - consists of a series of overlapping BSSs (each containing an AP) connected together by means of a Distributed System (DS). Although the DS could be any type of network, it is typically an Ethernet LAN.

The three topologies specified above can be divided into two operating modes: as a first mode: infrastructure mode, where each station connects to an AP. The combination of an AP and a station (or group of stations) creates a BSS; combining several different APs and their respective stations yields an ESS. And, as a second mode: Ad-hoc mode, where the stations connect to each other directly (without an AP). This group of stations forms an IBSS.

The above mentioned Clear Channel Assessment (CCA) is a mechanism used in 802.11 to detect a busy channel and to refrain from transmission. This principle is called Carrier Sense (CS), where each station waits until the channel is free so as to minimize the number of collisions. The channel may be busy because other 802.11 stations are currently transmitting. In addition, since 802.11 products operate in an unlicensed band, other technologies may be transmitting and the station needs to defer until the channel is clear.

The CCA mechanism comprises two sub-mechanisms:
1) Detecting a valid 802.11 signal above a certain threshold; and
2) Energy detection of any signal, not necessarily an 802.11 signal, above a certain threshold.

For example, the 802.11n defines that the CCA mechanism should label the channel as 'busy' if one of the following applies:
A valid 802.11 signal is detected at a receive level of -82 dBm (or above) with a detection probability of at least 90 % within 4 µsec (sub-mechanism 1).

Any signal that is at least 20 dB above the minimum modulation and coding rate sensitivity, which is -82 dBm, so any signal above -82 + 20 = -62 dBm (sub-mechanism 2).

The first rule means that a receiver must detect a valid 802.11 signal within the Legacy preamble (specifically, within the Legacy Short Training Field, L-STF, which is 8 µsec long) with high probability. These rules are applied for a 20 MHz channel which is also the primary channel.

For larger bandwidths, additional rules are defined. Since 802.11n increased the supported bandwidth (BW) from 20 MHz to 40 MHz channels, the CCA mechanism was also updated to support 40 MHz channels. For a 40 MHz channel, a valid signal is to be detected at a receive level of -79 dBm (or above) with a detection probability of at least 90 % within 4 µsec.

The 40 MHz channel is divided into a primary 20 MHz channel and a secondary 20 MHz channel, so that legacy stations (supporting only 20 MHz) are supported; in addition, neighboring access points (APs) can divide the 40 MHz channel between themselves. For the primary 20 MHz channel, the same CCA rules described earlier are defined. For the secondary 20 MHz channel, the energy detection threshold of -62 dBm is defined, but no threshold for valid signal is defined. The 802.11ac standard added a valid 802.11 signal detection, as well as fine-tuning the energy detection levels, on the secondary channels.

There are two mechanisms which control the RX sensitivity: Adaptive Noise Immunity (ANI) and Adaptive Interference Immunity (AII). Both mechanisms modify the CCA level. The ANI feature improves network performance in environments with a high level of non-802.11 noise from devices such as micro-waves, Bluetooth headsets, video monitors and cordless phones.

The AII feature improves network performance in environments with high 802.11 interference. The higher the CCA threshold (i.e. -72 dBm instead of -82 dBm), the less sensitive the receiver is (therefore more immune to noise) and the higher the probability of collision with hidden nodes.

In fact, increasing the CCA threshold will worsen a hidden node problem, because some other stations will not be detected by the station's receiver, but their Signal to Noise and Interference Ratio (SINR) will be affected by the station's transmissions.

If the CCA mechanism of a first station determines that the channel is busy, and the first station has data to transmit, the first station will defer the transmission until the channel is free. This will occur even if the first station needs to transmit to a nearby (e.g. neighboring) station, such that the transmission to nearby station will not interfere with the current transmission(s) detected with the CCA mechanism. This problem increases when working in BSS mode with RTS/CTS, when both transmitter and receiver activate a Network Allocation Vector (NAV) period for all stations that can receive their signal. Therefore, in case of a busy channel, a station cannot transmit and the overall system throughput cannot be increased (as only a single station can transmit in any given moment in an area).

US 2013/017794 A1 provides techniques adaptively adjust a clear channel assessment threshold for use when a wireless device is to transmit in a wireless network that operates on a channel in a radio frequency band. A first wireless device, configured to wirelessly communicate with one or more second wireless device in the wireless network, receives energy on the channel in the frequency band, analyzes the received energy to detect interference on the channel and determines a type of interference detected in the received energy. The clear channel assessment threshold is adjusted by an amount depending on the type of interference detected.

WO 2007/027442 discloses a method for dynamically adapting a clear channel assessment threshold of a wireless communications channel by determining the status of a busy channel indicator for at least a first parameter and dynamically changing the clear channel assessment threshold based on the status of the busy channel indicator.

EP 2 915 382 which represents the prior art according to Article 53(3) EPC, discloses methods and apparatuses for requesting clear channel assessment (CCA) measurements and adjusting CCA thresholds and transmission power based on the reported measurements. Access points (APs) coordinate transmission power to reduce interference with each other and to determine optimal transmission power to each mobile station (STA).

### SUMMARY

It is the object of the invention to provide a concept which increases the throughput in a wireless network.

This object is achieved by the features of the independent claims. Further implementation forms are apparent from the dependent claims, the description and the figures.

The invention is defined by the appended claims.

A first aspect of the invention relates to a station according to claim 1.

By increasing the CCA threshold as disclosed in the appended claims, it can be achieved, that the station could receive and even decode a transmission from a nearby station, although the channel was deemed to be busy, when the signal from the nearby station is stronger than the signal from the current transmitting station (e.g. causing the channel to be busy and transmitting the signal which was is not meant for the station). The increase of the CCA threshold can also lead to an adjustment of the cell size. A comparatively high CCA threshold (at which the channel is deemed to be busy) leads to a comparatively small cell size, while a comparatively low CCA threshold leads to a comparatively high cell size. This adaption of the CCA threshold and therefore of the cell size can be performed by the controller highly dynamically, e.g. every time the channel is busy and the receiver received a signal which is not meant for the station.

As an example, the CCA threshold and therefore the cell size can be adjusted on per packet basis.

In the present application it shall be understood that a received signal which is not meant for the station can be a signal which uses the same wireless standard as the station and which may even be decoded by the station but which was not addressed to the station. Furthermore, such a received signal can also be any interference signal which caused interference, in the wireless channel. Hence, such received signal does not necessarily need to be a data signal carrying information.

Hence, the present invention enables a dynamical adjustment of the cell size and enables simultaneous receptions and transmissions without increasing the interference experienced by a station. In addition, it enables a station (such as an Access Point or a Client) to modify its Clear Channel Assessment mechanism such that the station can receive a transmission even when the channel is deemed busy.

As already described above by dynamically adjusting the following is meant: an adjustment that can be carried out per CCA event (when the CCA is flagged as 'busy') based on an immediate sensing of the channel (i.e. when a signal was received that is not meant for the station), and not based on a long-term computation.

In the present invention, if the channel is busy, the station (e.g. in form of an access point (AP)) increases the CCA threshold such that it will only detect transmissions from nearby stations, for which the Signal to Interference and Noise Ratio (SINR) at the AP is sufficiently high. In addition, transmission from these nearby stations will not severely interfere with stations from neighboring BSSs.

The station can be for example an access point or a client. Furthermore, the station can be configured to act as an access point in Infrastructure mode or any station in an ad-hoc mode. The invention can be employed to increase the capacity of multiple APs without increasing the hidden node effect and the probability of hidden node collisions (or minimizing the effect of hidden-node and probability of hidden-node collisions). The invention can be further deployed to reduce noise and interference experienced in the system without decreasing cell size, while maintaining the same coverage.

This invention increases the capacity of the system without modifying the coverage of the cell or increasing the number of hidden-node collisions. If the CCA mechanism determines that the channel is busy, a station will not wait until the channel is free to restart the Rx process, since variations in received signal power during the channel's busy state are taken into consideration.

By increasing the CCA threshold as disclosed in the appended claims, such that after increasing the CCA threshold, the determined interference value is below the CCA threshold it can be achieved that, when invoking the CCA mechanism again, the CCA detector detects the channel as free, and the station does not have to refrain from transmitting or receiving signals anymore. Therefore, a data throughput of the station is increased. The interference value indicating the signal strength of interference in the environment of the station can be for example an RSSI value measured by the receiver of the station in the wireless channel.

The invention allows precisely increasing the CCA threshold to the present or given interference in an environment of the station, enabling simultaneous data transmission of multiple stations in a non-overlapping channel. The implementation form is based on the finding that in some scenarios, even if the channel is busy, a station could transmit data to nearby stations, using low transmit power, without increasing the interference to other stations (outside the cell).

The invention allows the at least one other station to transmit a signal to the station, such that the station can decode the signal, with minimal impact on other stations.

The disclosure allows increasing the CCA threshold to interference conditions in an environment of the station. If the CCA mechanism determines that the channel is busy (i.e. some other station is transmitting), then the station will increase the CCA to take into account the interference conditions, such that it will be able to decode transmissions from nearby stations and in addition will adjust the TX power of the transmitting station. Furthermore, the station can also decide in addition to adjust the TX power of the nearby clients. Therefore, it is not only achieved that transmissions of the station itself but also transmissions of other stations, communicating with station, interfere less with transmissions outside the cell of the station when compared to conventional networks.

The invention allows specifically increasing the CCA threshold to the occurring interference in an environment of the station.

The disclosure allows having different CCA thresholds, such as a CCA threshold for signals based on the same wireless standard than the signals the transmitted and/or received by the station and the further CCA threshold for any other interfering signal experienced on the wireless channel. By having different CCA thresholds, the throughput of the station and therefore the capacity of the complete system can be further improved.

The disclosure allows reducing noise and interference experienced in the system without decreasing cell size, while maintaining the same coverage.

The disclosure allows providing a centralized management, stronger security, and flexibility.

The disclosure allows providing of a decentralized and fail-safe wireless network.

The disclosure allows providing of higher data transmission speeds and stronger security to the network.

A second aspect of the invention relates to a method according to claim 8, for operating a

A third aspect of the invention relates to a computer according to claim 10.

The computer program may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) and an EPROM (Erasable Programmable Read Only Memory). A computer-readable medium may also be a data communication network, for example the Internet, which allows downloading a program code.

The methods, systems and devices described herein may be implemented as software in a Digital Signal Processor, DSP, in a micro-controller or in any other side-processor or as hardware circuit within an application specific integrated circuit, ASIC.

The invention can be implemented in digital electronic circuitry, or in computer hardware, firmware, software, or in combinations thereof, e.g. in available hardware of conventional mobile devices or in new hardware dedicated for processing the methods described herein. These and other aspects of the present invention will become apparent from and elucidated with reference to the embodiments described hereinafter.

### BRIEF DESCRIPTION OF THE DRAWINGS

Further embodiments of the invention will be described with respect to the following figures, in which:
Fig. 1a shows a schematic diagram of a station according to an embodiment of the invention;
Fig. 1b shows a schematic diagram of a station according to a non-claimed embodiment.
Fig. 2a shows a schematic diagram of an infrastructure-type wireless network for explaining the invention;
Fig. 2b shows a schematic diagram of an infrastructure-type wireless network for explaining the invention;
Fig. 3a shows a schematic diagram of an infrastructure-type wireless network for explaining the invention;
Fig. 3b shows a schematic diagram of an infrastructure-type wireless network for explaining the invention;
Fig. 4a shows a flow chart of a method for operating the station according to an embodiment of the invention;
Fig. 4b shows a flow chart of a method for operating the station according to an embodiment of the invention;
Fig. 5 shows a schematic diagram of a wireless network comprising stations according to embodiments of the present invention;
Fig. 6 shows a schematic diagram of the wireless network from Fig. 5 with an adjusted CCA threshold;
Fig. 7 shows a schematic diagram of a wireless network comprising stations according to embodiments of the present invention configured to operate in an ad-hoc wireless network mode; and
Fig. 8 shows a diagram comparing the performance of a system with conventional stations and a system with stations according to embodiments of the invention.

### DETAILED DESCRIPTION OF EMBODIMENTS OF THE INVENTION

The illustration in the accompanying drawings is schematically. In different drawings, similar or identical elements or steps are provided with the same reference numerals.

The following detailed description is merely exemplary in nature and is not intended to limit application and uses.

Furthermore, there is no intention to be bound by any theory presented in the preceding background or summary or the following detailed description.

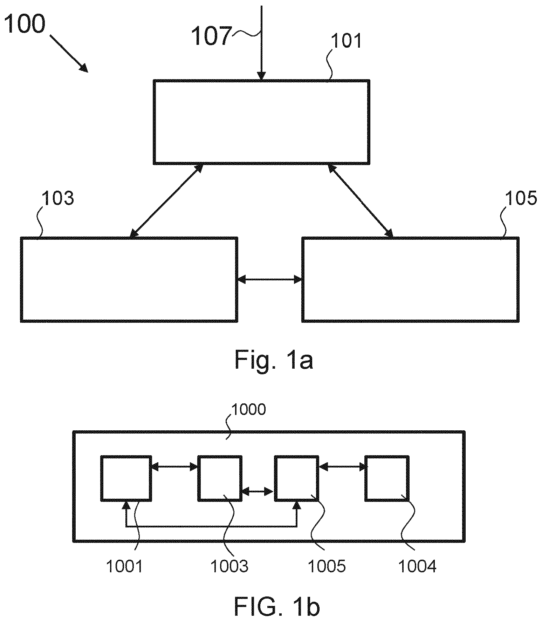

Fig. 1a shows a schematic diagram of a station 100 according to an embodiment of the invention.

According to an embodiment of the invention, the station 100 may comprise a receiver 101, a clear channel assessment, CCA, detector 103, and a controller 105.

The receiver 101 may be configured to receive a wireless signal 107 sent via a wireless channel.

The CCA detector 103 may be configured to detect, based on a CCA threshold, if the wireless channel is busy.

The controller 105 may be configured to adjust the CCA threshold of the CCA detector 103 when the wireless channel is busy and the signal 107 received via the wireless channel is not meant for the station 100.

As already described in the foregoing, adjusting the CCA threshold dynamically (e.g. in response to a reception of a signal 107 which is not meant for the station 100 and when the channel is busy) it can be achieved that the throughput of the station is increased.

Fig. 1b shows a schematic diagram of a station 1000 according to a non-claimed embodiment.

According to an embodiment of the invention, the station 1000 may comprise a receiver 1001, a clear channel assessment, CCA, detector 1003, and a controller 1005. Further, the station 1000 may comprise a transmitter 1004. The receiver 1001, the CCA detector 1003 and the controller 1005 can be identical to the receiver 101, the CCA detector 103, and the controller 105 of the station 101.

The transmitter 1004 may be configured to transmit a transmit power adjust signal to at least one other station depending on the determined interference value, the transmit power adjust signal requesting the other station to adjust a transmit power of the other station based on the transmit power adjust signal. The transmit power adjust signal can be provided by the controller 1005 to the transmitter 1004 in dependence on the determined interference value. Furthermore, the controller 1005 can be configured to adjust a transmit power of the transmitter 1004 in dependence on the determined interference value.

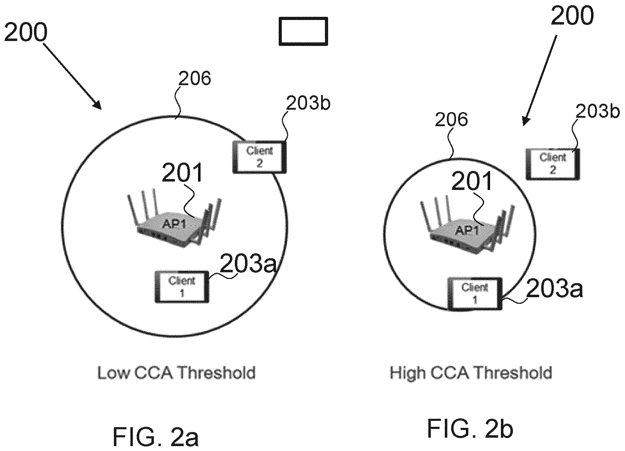

Fig. 2a shows a schematic diagram of an infrastructure-type wireless network 200 for explaining the invention.

Clear Channel Assessment (CCA) is a mechanism used in 802.11 to detect a busy channel and refrain from transmission. Fig. 2a and Fig. 2b depict two cases, in which for both of these figures a circle defines the area in which an AP 201 (e.g. a station according to an embodiment of the present invention) can hear (e.g. successfully detect) the transmission from clients:
Given a low CCA threshold, the AP 201 can hear a second client 203b and refrains from transmitting when the second client 203b transmits, as illustrated in Fig. 2a.
Given a high CCA threshold, the AP 201 cannot hear the second client 203b, but the second client 203b can hear the AP 201 (so the second client 203b becomes a hidden node for the AP 201). When the AP 201 transmits, it may interfere with the second client's 203b transmissions, as illustrated in Fig. 2b.

In other words, Fig. 2a shows an infrastructure-type wireless network 200, the network 200 comprises a first AP 201, a first client 203a, and a second client 203b.

A first perception pattern 206 defines the area in which the first AP 201 can hear the transmission from the two clients 203a, 203b. Therefore, the first AP 201 refrains from transmitting to the first client 203a when the second client 203b transmits. The perception pattern is dependent on the CCA threshold of the AP 201. In the example, shown in Fig. 2a, a comparatively low CCA threshold is adjusted at the AP 201, leading to a comparatively large perception pattern 206.

The perception pattern refers to the area within which a station can hear or perceive data (passive) or where it can transmit data (active).

Fig. 2b depicts the same infrastructure-type wireless network 200 as shown in Fig 2a, but with the difference that a comparatively high CCA threshold is adjusted at the AP 201 which leads to a comparatively small perception pattern 206.

In contrast to Fig. 2a, in Fig. 2b the perception pattern 206 does not extend to the second client 203b. The first AP 201 cannot hear the second client 203b, i.e. no service at the second client 203b is provided from the first AP 201, but the second client 203b can hear the first AP 201 (so the second client 203b becomes a hidden node for the first AP 201). When the first AP 201 transmits it may interfere with the transmissions of the second client 203b or other transmissions aimed at second client 203b.

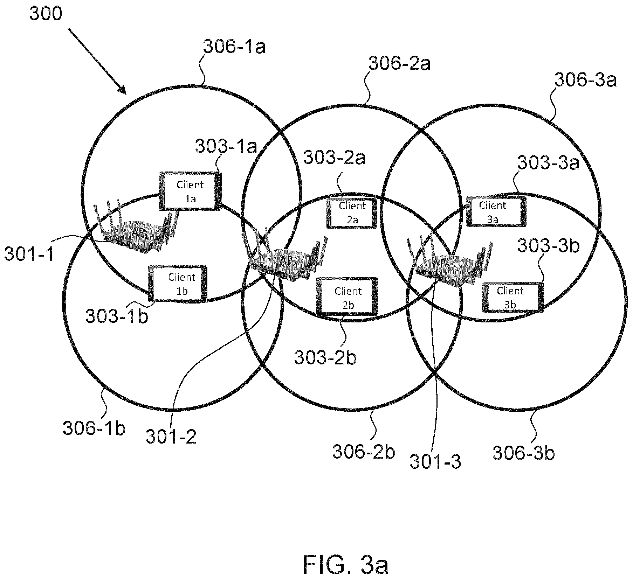

Fig. 3a shows a schematic diagram of an infrastructure-type wireless network for explaining the invention.

Basic Transmitter Power Control, TPC, is part of the 802.11b (Frequency Hopping Spread Spectrum), where different tables are defined, allowing a different transmit power depending on the frequency hopping total bandwidth.

Amendment 802.11h allows using 5 GHz U-NII bands. The Federal Communications Commission, FCC, regulation for Unlicensed National Information Infrastructure (U-NII) using 5.25 to 5.35 GHz and 5.47 to 5.725 GHz bands requires a TPC mechanism that limits the TX power to 24 dBm EIRP (or less), equivalent isotropically radiated power, EIRP.

Amendments 802.11e and 802.11z enhance TPC and enable an AP to lower the transmission power of all stations by utilizing Transmit Power Control (TPC) messages (Beacon TPC IE and TPC request).

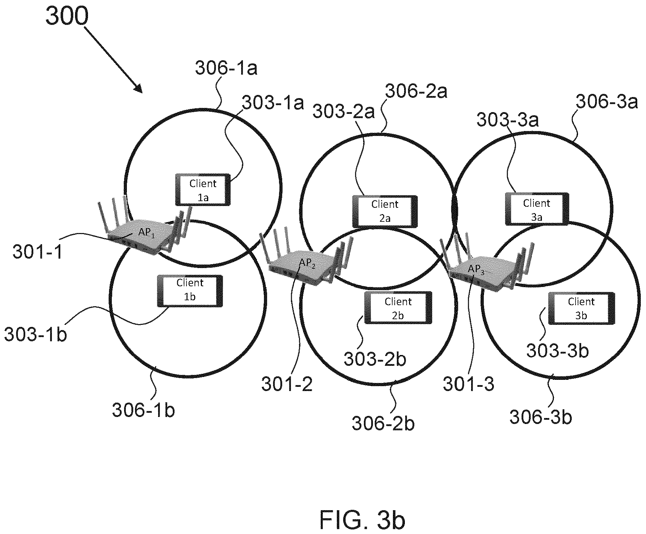

For example, the AP can inform all stations what is the maximum local transmit power; the stations (those supporting 802.11h) in turn will not transmit with a higher transmit power. Decreasing the transmission power of the stations will reduce their coverage, which in turn will reduce interference to stations and APs belonging to a different BSS. The figures 3a and 3b depict the cases of low and high transmit power and their effect on the interference experienced by neighboring stations including APs.

Fig. 3a shows a schematic diagram of an infrastructure-type wireless network 300 as an example for high transmit power; each circle represents the coverage area of a non-AP station (a client having the reference signs 303-1a - 303-3b) (e.g. RSSI ≥ -82 dBm).

In Fig. 3a, a first client 303-1a and a second client 303-1b communicate with a first access point 301-1, a third client 303-2a and a fourth client 303-2b communicate with a second access point 301-2. A fifth client 303-3a and a sixth client 303-3b communicate with a third access point 301-3.

A first perception pattern 306-1a refers to the perception pattern of the first client 303-1a. Correspondingly, to each of the further clients 303-1b, 303-2a, 303-2b, 303-3a, 303-3b also a specific perception pattern 306-1b, 306-2a, 306-2b, 306-3a, 306-3b is assigned.

Each of the perception patterns 306-1a, 306-1b, 306-2a, 306-2b, 306-3a, 306-3b represents the coverage area of the respective client.

As shown in Fig. 3a, the first client 303-1a and the second client 303-1b interfere with the transmissions received at the second access point 301-2. Likewise, the third client 303-2a and the fourth client 303-2b interfere with the transmissions received at the third access point 301-3.

Fig. 3b shows a further schematic diagram of the infrastructure-type wireless network 300 from Fig. 3a, in which the clients operate at lower transmit power compared to the scenario as depicted in Fig. 3a.

Each of the clients 303-1a, 303-1b, 303-2a, 303-2b, 303-3a, 303-3b has a reduced or minored perception pattern 306-1a, 306-1b, 306-2a, 306-2b, 306-3a, 306-3b compared to the scenario as depicted in Fig. 3a resulting from the reduced transmit powers of the clients 303-1a, 303-1b, 303-2a, 303-2b, 303-3a, 303-3b.

As shown, by decreasing the transmit power of each station, i.e. of each of the clients 303-1a, 303-1b, 303-2a, 303-2b, 303-3a, 303-3b, it is accomplished that each pair of clients, e.g. the first client 303-1a and the second client 303-1b forming a first pair, the third client 303-2a and the fourth client 303-2b forming a second pair, the fifth client 303-3a and the sixth client 303-3b, forming a third pair, communicate with its designated AP and don't interfere with transmissions of the other clients.

For instance, the first access point 301-1 communicates with and is assigned to the first pair of clients, the second access point 301-2 communicates with and is assigned to the second pair and the third access point 301-3 communicates with and is assigned to the third pair.

Each of the clients 303-1a, 303-1b, 303-2a, 303-2b, 303-3a, 303-3b does not interfere with other APs or at least such interference is minimized. For example, the first client 303-1a and the second client 303-1b do not interfere with the second access point's 301-2 transmissions or transmissions received at the second access point 301-2.

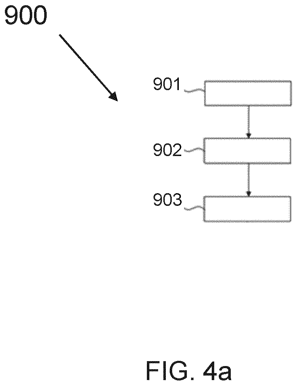

Therefore, the first access point 301-1 can work in parallel with the second access point 301-2. And the third access point 301-3 can work in parallel with the second access point 301-2. Fig. 4a shows a block diagram of a method 900 for operating a station (such as one of the stations 100; 501-2; 701-1; 1000) according to an embodiment of the invention.

The method 900 comprises a step of receiving 901 a wireless signal sent via a wireless channel.

Furthermore, the method 900 comprises a step of detecting 902, based on a CCA threshold, if the wireless channel is busy.

Furthermore, the method 900 comprises a step of adjusting 903 the CCA threshold when the wireless channel is busy and the signal received via the wireless channel is not meant for the station 100; 501-2; 701-1; 1000.

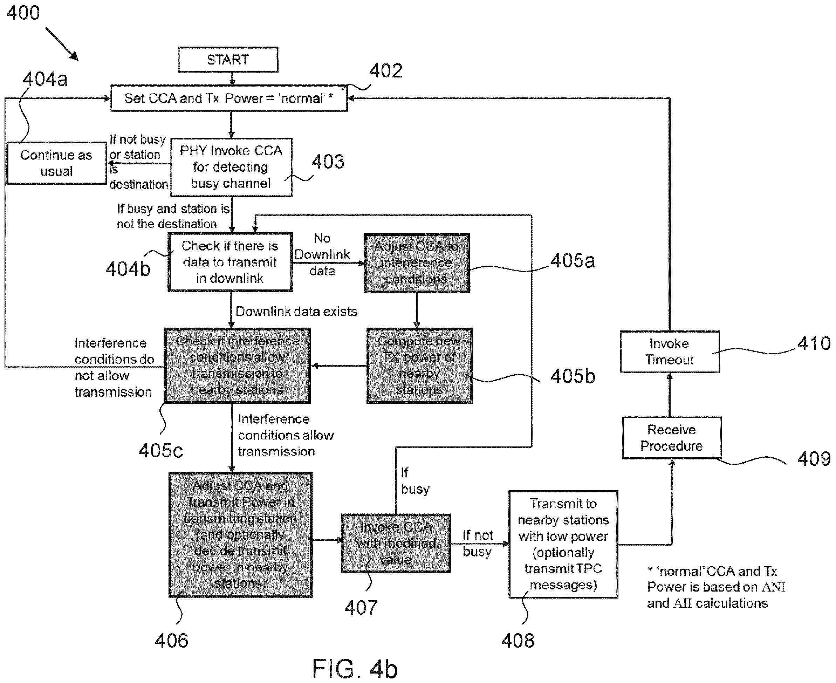

Fig. 4b shows a flow chart of a method 400 for operating the station (e.g. the station 100) according to an embodiment of the invention. The method 400 shown in Figure 4b provides a detailed implementation example, for the method 900 as described in conjunction with Fig. 4a.

The method 400 comprises a step 402 of setting a CCA threshold value and a transmitter power, TX power, to a normal value. Such transmitter power and CCA value setting may be adjusted in order to prevent too much unwanted interference between different wireless networks.

The normal values of the CCA threshold value and the transmitter power may be based on conventional ANI and AII calculations as described in the introductory part of the present application.

Furthermore the method 400 comprises a step 403 of invoking by the PHY a CCA detection. The CCA detection can be performed, for example, by the CCA detector 103 shown Fig. 1a or the CCA detector 1003, which is described in conjunction with Fig. 1b, to detect, based on a CCA threshold, if the wireless channel is busy. A physical layer, PHY, provides an electrical, mechanical, and procedural interface to the transmission medium. The PHY defines the means of transmitting raw bits rather than logical data packets over a physical link connecting network nodes.

The invocation of the CCA detection for a wireless channel can be for example based on the reception of a signal transmitted via the wireless channel.

If the channel is not detected as being busy or received signal was addressed to the station, then a conventional signal decoding and/or no adaption of the CCA threshold are performed (step 404a).

However, if the channel is busy and the station is not the destination, i.e. the received signal is not meant for the station (this includes the case of a station not being able to correctly decode the transmission and therefore understand if it is indeed the destination), a step 404b of checking 404b, if there is data to transmit in downlink is performed.

If the channel is busy and there is no data to transmit in the downlink, it may still be possible to receive a transmission from nearby stations, as long as their transmission does not interfere with current transmissions detected by the CCA mechanism.

Therefore, even if there this no data to transmit, the method 400 comprises a step 405a, in which an adjusting of the CCA threshold is performed.

The adjustment of the CCA threshold can be performed using the above mentioned CCA detector 103 or the later on described CCA detector 1003 in combination with the above mentioned controller 105 or the later on described controller 1005.

As an example, the CCA detector 103; 1003 can be configured to determine an interference value indicating a signal strength of interference in an environment of the station on which the method 400 is performed (such as the station 100 or the later described stations 501-2; 701-1; 1000). Furthermore, the CCA detector 103, 1003 can be configured to determine the wireless channel as busy, when the interference value exceeds the CCA threshold. The controller 105; 1005 can be configured to adjust the CCA threshold, such that after adjusting the CCA threshold, the determined interference value is below the CCA threshold.

In other words, upon the detection of a busy channel by the CCA detector 103, 1003, the controller 105, 1005 is aware about the interference conditions and adjusts the CCA threshold accordingly. As an example, assuming an interference value (e.g. an RSSI value) of -80 dBm and a CCA threshold (before adjusting) of -82 dBm, which would yield a busy channel. The controller 105, 1005 may now adjust the CCA threshold to -70 dBm which is above the interference value. Accordingly, when invoking the CCA again, the CCA detector 103, 1003 would yield, based on the adjusted CCA threshold, a non-busy channel.

In order to ensure that the transmissions of the nearby stations do not interfere with current transmissions, for instance from other stations which are not addressed to the station (e.g. in form of an AP), the station can also determine how to modify the transmit power of the nearby stations, by performing a step 405b of the method 400, i.e. computing new TX power of nearby stations. It is to be pointed that this is an optional step and may occur in an infrastructure mode in which the station is an AP.

Afterwards, a step 405c, checking, if the interference conditions allow transmission to nearby stations, is conducted.

This step, checking 405c, can also be performed, if the channel is busy and there is data to transmit in the downlink, i.e. directly following to the step of checking 404b, if there is data to transmit in downlink.

In detail, checking 405c suitability of transmission to nearby clients may be performed as follows:
Typically, when the CCA mechanism yields a busy channel, a transmitting station will refrain from transmission until the channel is clear. However, even if the channel is busy, a station 100; 501-2; 701-1; 1000 could decide that interference conditions allow transmission to a nearby station, i.e. the receiving station will be able to decode the transmission given the interference conditions.

For example, if the normal CCA energy threshold is -82 dBm, and the CCA mechanism reports an interfering signal received at an RSSI of -80 dBm, then a station 100; 501-2; 701-1; 1000 can decide that when a robust waveform, e.g. low modulation and coding rate - MCS, is used for a transmission to a nearby station, the nearby station can decode the transmission correctly.

In order to transmit to the nearby station given the interference conditions, both CCA level and transmit power settings of the transmitting station may need to be adjusted. Identical to the typical cases, the transmitter may choose to adjust the modulation and coding rate, in addition to adjustment of transmit power and CCA level.

In detail, adjusting CCA thresholds and transmit power may be performed as follows:
When there is downlink data to transmit, if a transmitting station 100; 501-2; 701-1; 1000 decides that interference conditions allow it to transmit data to a nearby station 100; 501-2; 701-1; 1000 (such that the receiving station will correctly decode the transmission), it will adjust its own CCA thresholds and transmit power accordingly.

In addition, if the transmitting station is an AP (in infrastructure mode), and if the receiving station is expected to respond to the transmission (for example transmit an ACK message, since not all transmission require an immediate ACK response), then the transmitting station (AP) will modify the transmit power of the nearby stations as well.

The CCA thresholds will be adjusted such that invoking the CCA mechanism with the adjusted thresholds will not yield a busy channel. Accordingly, the transmit power will be adjusted such that intended recipient will be able to decode the transmission, while interference to stations and APs in neighboring BSSs will be minimized.

Following the adjustments, the CCA mechanism can be invoked again, and if it yields a clear channel, the transmitting station can begin transmission. Once transmission is over, the transmitting station switches to receive mode (i.e. waits for an acknowledgment), and after a time-out period (for example a SIFS duration, until the channel is free) during which receive mode is in effect, the CCA thresholds and the transmit power will return to the 'normal' value.

If the transmitting station is an AP (in infrastructure mode), and if the transmitting station modified the transmit power settings of the nearby stations, then after the time-out period, the transmitting station will return the transmit power settings of the nearby stations to their normal value (via a new TPC message).

When there is no downlink data to transmit:
In this case the AP needs to modify its own CCA as well as the transmit power of itself and nearby stations. The AP therefore needs to transmit the new modified transmit power to the nearby stations. If the AP decides that interference conditions allow it to transmit data to a nearby station (such that the station will correctly decode the transmission), it will adjust its own CCA thresholds and transmit power accordingly.

The CCA thresholds will be adjusted such that invoking the CCA mechanism with the adjusted thresholds will not yield a busy channel. Accordingly, the transmit power of the AP will be adjusted such that intended recipient will be able to decode the transmission, while interference to stations and APs in neighboring BSSs will be minimized.

Following the adjustments, the CCA mechanism can be invoked again, and if it yields a clear channel, the AP can begin transmission. The AP will then transmit the modified transmit power adjust signal to the nearby stations. Once transmission of the modified transmit power is over, the AP switches to receive mode, and waits for a transmission from the nearby stations.

After a time-out period (the time-out duration may depend on duration of interfering signal, decision of the AP, etc.) during which receive mode is in effect, the CCA thresholds and the transmit power of both AP and nearby stations will return to the 'normal' value (for nearby stations, the AP will transmit a new TPC message).

In cases where after the modification of the CCA and invoking the modified CCA, the channel is still busy, the station should again adjust its CCA and optionally the transmit power of itself and nearby stations.

If the interference conditions allow transmission to nearby stations, as a further step of the method 400, an adjusting 406 of the CCA threshold and an adjusting of transmit power of at least one transmitting station and, optionally, according to an embodiment of the invention, deciding about the transmit powers in nearby stations, is conducted.

For example, lowering the maximum transmit power is used such that the transmission is not received in nearby BSSs. In some cases, the AP may decide not to modify the transmit power of nearby stations at all.

Afterwards, as a next step, invoking 407 the CCA detector with the modified CCA threshold is conducted.

If the channel is busy, the method is resumed starting with step 404b.

If the channel is not busy, in order to inform the nearby stations of the modification of transmit power, transmitting 408 to nearby clients may be performed. Additionally or alternatively, transmitting 408 data to nearby clients may be performed.

In order to adjust the nearby stations' transmit power, the AP may transmit a TPC message (a transmit power adjust signal) to the nearby stations; before transmitting the TPC message, the AP may ensure that it can transmit the TPC message without interfering the current transmission in one or more neighbouring BSSs.

As an example, a transmitter of the station 100; 501-2; 701-1; 1000 can be configured to transmit a transmit power adjust signal to at least one other station depending on the determined interference value, the transmit power adjust signal requesting the other station to adjust a transmit power of the other station based on the transmit power adjust signal.

In order to ensure this is possible, the AP can, for example, estimate the path loss between stations in the neighbouring BSSs and itself, and reduce its own transmit power such that the stations in the neighbouring BSSs will not receive its own signal above their CCA threshold, adjust its own CCA and change the power of stations within its BSS. This means that in some scenarios, the hidden node problem actually may improve the system performance.

Afterwards, as a next step 409, a receiving procedure is conducted. In other words, the station enters a receive mode in which it is waiting to receive transmissions from nearby stations.

Afterwards, as a next step 410, a timeout is invoked.

As an example, the controller 105 or the controller 1005 can be configured to, after a predetermined time from the adjustment of the transmit power of the transmitter of the station or from the reception of a signal meant for the station, reset the transmit power of the transmitter to a predefined (normal) value and also reset the CCA threshold to a predefined (normal) value.

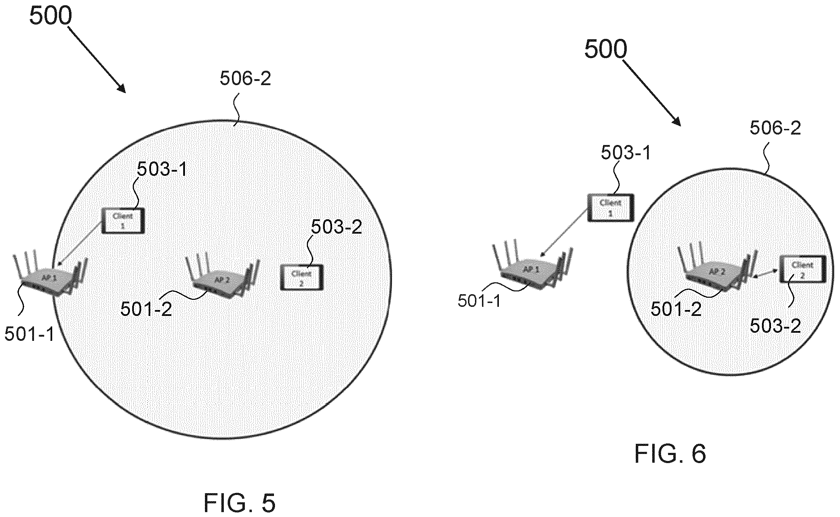

Each of Figs. 5 and 6 shows a schematic diagram of a wireless network 500 comprising stations according to embodiments of the present invention. The wireless network 500 comprises a first AP 501-1 communicating with a first client 503-1, and a second AP 501-2 communicating with a second client 503-2. The APs 501-1, 501-2 but also the clients 503-1, 503-2 can be implementation forms of the station 100; 501-2; 701-1; 1000. In other words, the APs 501-1, 501-2 and the clients 503-1, 503-2 can be configured to dynamically adjust their CCA thresholds and optionally their transmit powers.

Furthermore, the APs 501-1, 501-2 can be configured to provide transmit power adjust signals to the clients 503-1, 503-2. Although in the network 500 all stations can be stations according to embodiments of the present invention, it is already sufficient if only one of the APs, e.g. the second AP 501-2 is a station according to an embodiment of the present invention to achieve a higher throughput when compared to conventional networks.

The first AP 501-1 and the second AP 501-2 can hear each other's transmission, and the second AP 501-2 and the first client 503-1 can hear each other's transmission. This can be seen at the size of cell 506-2 or the perception pattern 506-2 of the second AP 501-2.

The first AP 501-1 and the first client 503-1 are hidden nodes in the eyes of the second client 503-2, and vice versa. When the first client 503-1 is transmitting to the first AP 501-1, the CCA mechanism at the second AP 501-2 senses the transmission and, therefore, the second AP 501-2 cannot transmit to the second client 503-2 and cannot receive a transmission from the second client 503-2. The overall system throughput would therefore be limited to a single concurrent transmission.

However, according to embodiments of the present invention, when the second AP 501-2 senses the first client's 503-1 transmission to first AP 501-1, it will adjust its own CCA and the second client's 503-2 transmit power (e.g. based on the method 400), such that the second client 503-2 can transmit to the second AP 501-2 and the second AP 501-2 can decode the transmission from the second client 503-2, even when the first client 503-1 is transmitting to first AP 501-1, hence overall throughput is increased compared to conventional systems. By adjusting CCA threshold of the second AP 501-2 it can be achieved that the second AP 501-2 is capable of receiving the data sent by the second client 503-2.

By adjusting the transmit power of the second AP 501-2 itself and by adjusting the transmit power of the second client 503-2, it can be further achieved that the transmissions between the second AP 501-2 and the second client 503-2 have no negative influence (do not interfere) with the transmissions between the first AP 501-1 and the first client 503-1. As can be seen, in this example, it is already sufficient, when only one of the APs is a station according to an embodiment of the present invention to increase the throughput of the whole system.

Fig. 6 shows a schematic diagram of the network 500 after the adjustment of the CCA threshold by the second AP 501-2. It can be clearly seen that the size of the cell 506-2 or the perception pattern 506-2 of the second AP 501-2 is much smaller when compared to Fig. 5. Therefore the transmissions between the second AP 501-2 and the second client 503-2 do not interfere with the transmissions between the first AP 501-1 and the first client 503-1 anymore and the second AP 501-2 does not have to refrain from transmissions anymore. Therefore, the overall system throughput is doubled when compared to conventional systems.

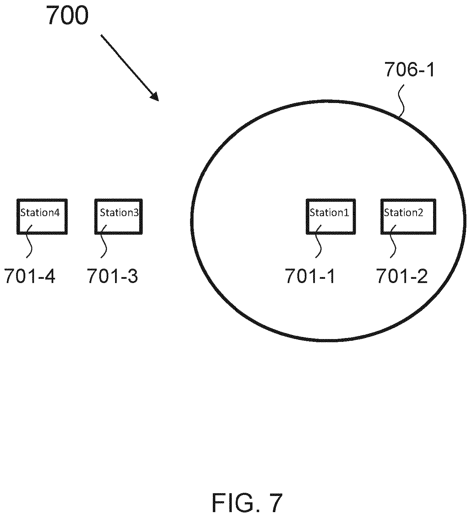

Fig. 7 shows a schematic diagram of a wireless network 700 according to embodiments of the present invention, the wireless network 700 comprising a first station 701-1, a second station 701-2, a third station 701-3, and a fourth station 701-4.

At least the station 701-1 and one further station of the stations 701-2, 701-3, 701-4 may be configured to operate in an ad-hoc wireless network mode.

At least the station 701-1 is a station according to an embodiment of the present invention. The first station 701-1 is configured to adjust its own CCA threshold. The first station 701-1, may adjust its CCA threshold such that it still can receive signals from the second station 701-2.

In this case, the cell size of the first station 701-1 (denoted by the perception pattern 706-1) is small enough in order to communicate with the second station 701-2 and in order to not interfere with other stations. The perception pattern 706-1 denotes the area throughout which the first station 701-1 can hear other stations.

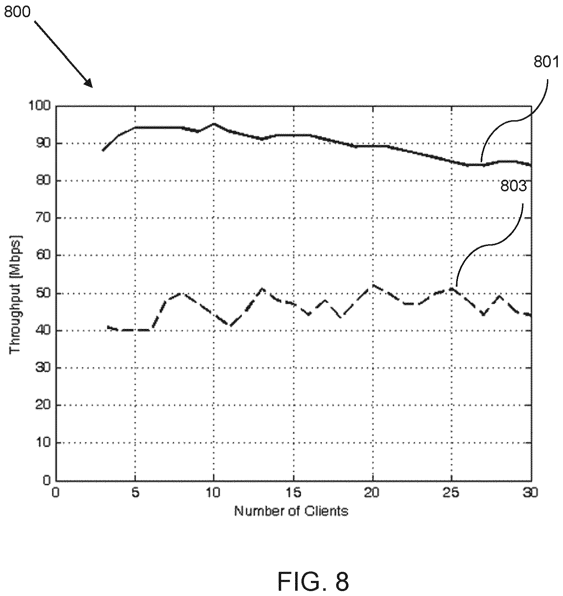

Fig. 8 shows a diagram 800 comparing the performance of a wireless system comprising stations according to embodiments of the present invention with the performance of a conventional wireless system.

The plot 800 in Fig. 8 depicts the increase in throughput when using embodiments of the present invention, for two indoor APs separated by a distance of 10 m. The y-axis of the plot 800 depicts the data transfer rate in terms of throughput of one AP or, more precisely, the average throughput of one of the two indoor APs in megabit per second.

In telecommunications, bit rate or data transfer rate is the average number of bits, characters, or blocks per unit time passing between equipment in a data transmission system. The x-axis of the plot 800 shows the number of clients communicating with the two indoor APs.

Two lines 801, 803 are shown in the plot of Fig. 8, representing performance characteristics. The throughput for a wireless system with two indoor APs operating according to embodiments of the present invention is represented by the solid line 801.The throughput for a wireless system with conventional APs not operating according to an embodiment of the present invention is represented by the dashed line 803. From the solid line 801, especially if the solid line 801 is compared to the dashed line 803, it can be seen that by using embodiments of the present invention the throughput can be increased by more than 80 % when compared to a conventional system.

Many alternatives, modifications, and variations will be apparent to those skilled in the art in light of the above teachings. Of course, those skilled in the art readily recognize that there are numerous applications of the invention beyond those described herein.

In the claims, the word "comprising" does not exclude other elements or steps, and the indefinite article "a" or "an" does not exclude a plurality. A single processor or other unit may fulfill the functions of several items recited in the claims.

The mere fact that certain measures are recited in mutually different dependent claims does not indicate that a combination of these measured cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems.

Many alternatives, modifications, and variations will be apparent to those skilled in the art in light of the above teachings. Of course, those skilled in the art readily recognize that there are numerous applications of the invention beyond those described herein.

In the claims, the word "comprising" does not exclude other elements or steps, and the indefinite article "a" or "an" does not exclude a plurality. A single processor or other unit may fulfill the functions of several items recited in the claims.

The mere fact that certain measures are recited in mutually different dependent claims does not indicate that a combination of these measured cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems.

## Claims

1. A station (100; 501-2; 701-1; 1000) comprising:
- a receiver (101; 1001) configured to receive a wireless signal sent via a wireless channel;
- a transmitter (1004);
- a clear channel assessment, CCA, detector (103; 1003) configured to detect, based on a CCA threshold, if the wireless channel is busy; and
- a controller (105; 1005) configured to increase the CCA threshold of the CCA detector (103; 1003) and set a transmit power of the transmitter at a low transmit power when the wireless channel is busy and the signal received via the wireless channel is not meant for the station (100; 501-2; 701-1; 1000); wherein the CCA detector (103; 1003) is configured to determine an interference value indicating a signal strength of interference in an environment of the station and to determine the wireless channel as busy, when the interference value exceeds the CCA threshold; and
wherein the transmitter (1004) configured to adjust a modulation and coding rate for signals transmitted by the transmitter (1004) depending on the determined interference value.

2. The station (100; 501-2; 701-1; 1000) according to claim 1,
wherein the controller (105; 1005) is configured to increase the CCA threshold, such that after increasing the CCA threshold, the determined interference value is below the CCA threshold.

3. The station (100; 501-2; 701-1; 1000) according to one of claims 1 to 2,
wherein the transmitter (1004) is configured to transmit a signal via the wireless channel to another station;
wherein the CCA detector (103; 1003) is further configured to, when the signal is to be transmitted and based on the CCA threshold, detect if the channel is busy;
wherein the controller (105; 1005) is further configured to, when the wireless channel is busy and the signal is to be transmitted, increase the CCA threshold;
wherein the CCA detector (103; 1003) is configured to detect anew if the wireless channel is busy, based on the increased CCA threshold; and
wherein the transmitter (101; 1001) is configured to transmit the signal, when the wireless channel is not busy.

4. The station (100; 501-2; 701-1; 1000) according to one of claims 1 to 3,
wherein the CCA threshold indicates a maximum signal strength for signals which can be decoded by the station (100; 501-2; 701-1; 1000) but are not addressed to the station, until which the wireless channel is detected as free;
wherein the CCA detector (103; 1003) is further configured to detect based on a further CCA threshold, that the wireless channel is busy, the further CCA threshold indicating a maximum signal strength of any signals within the wireless channel, until which the wireless channel is detected as free; and
wherein the CCA detector (103; 1003) is further configured to adjust the further CCA threshold.

5. The station (100; 501-2; 701-1; 1000) according to one of claims 1 to 4,
wherein the station (100; 501-2; 701-1; 1000) is an access point.

6. The station (100; 501-2; 701-1; 1000) according to one of the preceding claims 1 to 4, wherein the station (100; 501-2; 701-1; 1000) is configured to operate in an ad-hoc wireless network mode.

7. The station (100; 501-2; 701-1; 1000) according to one of the preceding claims 1 to 4, wherein the station (100; 501-2; 701-1; 1000) is configured to operate in an infrastructure-type wireless network mode.

8. A method (900) for operating a station (100; 501-2; 701-1; 1000), the method (900) comprising:
- receiving (901) a wireless signal sent via a wireless channel;
- detecting (902), based on a CCA threshold, if the wireless channel is busy;
- increasing (903) the CCA threshold and setting a transmit power of simultaneous transmission at a low transmission power when the wireless channel is busy and the signal received via the wireless channel is not meant for the station (100; 501-2; 701-1; 1000);
determining an interference value indicating a signal strength of interference in an environment of the station and determining the wireless channel as busy, when the interference value exceeds the CCA threshold; and
adjusting a modulation and coding rate for transmitted signals depending on the determined interference value.

9. The method (900) according to claim 8,
wherein the station (100; 501-2; 701-1; 1000) is an access point.

10. Computer program comprising a program code for performing the method (900) according to any one of claim 8 or 9, when the computer program runs on a computer.

## Patentansprüche

1. Station (100; 501-2; 701-1; 1000), die Folgendes umfasst:
- einen Empfänger (101; 1001), ausgelegt zum Empfangen eines über einen Drahtloskanal gesendeten Drahtlossignals;
- einen Sender (1004);
- einen "Clear-Channel-Assessment"- bzw. CCA-Detektor (103; 1003), ausgelegt zum Detektieren, basierend auf einer CCA-Schwelle, ob der Drahtloskanal belegt ist; und
- eine Steuerung (105; 1005), ausgelegt zum Erhöhen der CCA-Schwelle des CCA-Detektors (103; 1003) und Einstellen einer Sendeleistung des Senders auf eine niedrige Sendeleistung, wenn der Drahtloskanal belegt ist und das über den Drahtloskanal empfangene Signal nicht für die Station (100; 501-2; 701-1; 1000) bestimmt ist; wobei der CCA-Detektor (103; 1003) dazu ausgelegt ist, einen Störungswert zu bestimmen, der eine Signalstärke einer Störung in einer Umgebung der Station angibt, und zu bestimmen, dass der Drahtloskanal belegt ist, wenn der Störungswert die CCA-Schwelle überschreitet; und
wobei der Sender (1004) dazu ausgelegt ist, eine Modulations-und-Codierungsrate für durch den Sender (1004) übertragene Signale abhängig von dem bestimmten Störungswert anzupassen.

2. Station (100; 501-2; 701-1; 1000) nach Anspruch 1,
wobei die Steuerung (105; 1005) dazu ausgelegt ist, die CCA-Schwelle so zu erhöhen, dass nach Erhöhung der CCA-Schwelle der bestimmte Störungswert unter der CCA-Schwelle liegt.

3. Station (100; 501-2; 701-1; 1000) nach einem der Ansprüche 1 bis 2,
wobei der Sender (1004) dazu ausgelegt ist, ein Signal über den Drahtloskanal an eine andere Station zu übertragen;
wobei der CCA-Detektor (103; 1003) ferner dazu ausgelegt ist, wenn das Signal zu übertragen ist und basierend auf der CCA-Schwelle zu detektieren, ob der Kanal belegt ist;
wobei die Steuerung (105; 1005) ferner dazu ausgelegt ist, wenn der Drahtloskanal belegt ist und das Signal zu übertragen ist, die CCR-Schwelle zu erhöhen;
wobei der CCA-Detektor (103; 1003) dazu ausgelegt ist, basierend auf der erhöhten CCR-Schwelle erneut zu detektieren, ob der Drahtloskanal belegt ist; und
wobei der Sender (101; 1001) dazu ausgelegt ist, das Signal zu übertragen, wenn der Drahtloskanal nicht belegt ist.

4. Station (100; 501-2; 701-1; 1000) nach einem der Ansprüche 1 bis 3,
wobei die CCA-Schwelle eine maximale Signalstärke für Signale, die durch die Station (100; 501-2; 701-1; 1000) decodiert werden können, jedoch nicht an die Station adressiert sind, angibt, bis zu der der Drahtloskanal als frei detektiert wird;
wobei der CCA-Detektor (103; 1003) ferner dazu ausgelegt ist, basierend auf einer weiteren CCA-Schwelle zu detektieren, dass der Drahtloskanal belegt ist, wobei die weitere CCA-Schwelle eine maximale Signalstärke jeglicher Signale in dem Drahtloskanal angibt, bis zu der der Drahtloskanal als frei detektiert wird; und
wobei der CCA-Detektor (103; 1003) ferner dazu ausgelegt ist, die weitere CCA-Schwelle anzupassen.

5. Station (100; 501-2; 701-1; 1000) nach einem der Ansprüche 1 bis 4,
wobei die Station (100; 501-2; 701-1; 1000) ein Zugangspunkt ist.

6. Station (100; 501-2; 701-1; 1000) nach einem der vorhergehenden Ansprüche 1 bis 4, wobei die Station (100; 501-2; 701-1; 1000) dazu ausgelegt ist, in einem Ad-hoc-Drahtlosnetzwerkmodus zu arbeiten.

7. Station (100; 501-2; 701-1; 1000) nach einem der vorhergehenden Ansprüche 1 bis 4, wobei die Station (100; 501-2; 701-1; 1000) dazu ausgelegt ist, in einem Infrastruktur-Drahtlosnetzwerkmodus zu arbeiten.

8. Verfahren (900) zum Betreiben einer Station (100; 501-2; 701-1; 1000), wobei das Verfahren (900) Folgendes umfasst:
- Empfangen (901) eines über einen Drahtloskanal gesendeten Drahtlossignals;
- Detektieren (902), basierend auf einer CCA-Schwelle, ob der Drahtloskanal belegt ist;
- Erhöhen (903) der CCA-Schwelle und Einstellen einer Sendeleistung einer gleichzeitigen Übertragung auf eine niedrige Sendeleistung, wenn der Drahtloskanal belegt ist und das über den Drahtloskanal empfangene Signal nicht für die Station (100; 501-2; 701-1; 1000) bestimmt ist;
Bestimmen eines Störungswerts, der eine Signalstärke einer Störung in einer Umgebung der Station angibt, und Bestimmen, dass der Drahtloskanal belegt ist, wenn der Störungswert die CCA-Schwelle überschreitet; und
Anpassen einer Modulations-und-Codierungsrate für übertragene Signale abhängig von dem bestimmten Störungswert.

9. Verfahren (900) nach Anspruch 8,
wobei die Station (100; 501-2; 701-1; 1000) ein Zugangspunkt ist.

10. Computerprogramm, umfassend einen Programmcode zum Durchführen des Verfahrens (900) nach einem von Anspruch 8 oder 9, wenn das Computerprogramm auf einem Computer ausgeführt wird.

## Revendications

1. Station (100 ; 501-2 ; 701-1 ; 1000) comprenant :
- un récepteur (101 ; 1001) configuré pour recevoir un signal sans fil envoyé par l'intermédiaire d'un canal sans fil ;
- un émetteur (1004) ;
- un détecteur d'évaluation de canal libre, CCA, (103 ; 1003) configuré pour détecter, sur la base d'un seuil de CCA, si le canal sans fil est occupé ; et
- une unité de commande (105 ; 1005) configurée pour augmenter le seuil de CCA du détecteur de CCA (103 ; 1003) et régler une puissance de transmission de l'émetteur à une faible puissance de transmission lorsque le canal sans fil est occupé et que le signal reçu par l'intermédiaire du canal sans fil n'est pas destiné à la station (100 ; 501-2 ; 701-1 ; 1000) ; dans laquelle le détecteur de CCA (103 ; 1003) est configuré pour déterminer une valeur d'interférence indiquant une intensité de signal d'interférence dans un environnement de la station et pour déterminer le canal sans fil comme étant occupé, lorsque la valeur d'interférence dépasse le seuil de CCA ; et dans laquelle l'émetteur (1004) est configuré pour régler un taux de codage et de modulation pour des signaux transmis par l'émetteur (1004) en fonction de la valeur d'interférence déterminée.

2. Station (100 ; 501-2 ; 701-1 ; 1000) selon la revendication 1,
dans laquelle l'unité de commande (105 ; 1005) est configurée pour augmenter le seuil de CCA, de telle sorte qu'après l'augmentation du seuil de CCA, la valeur d'interférence déterminée se situe sous le seuil de CCA.

3. Station (100 ; 501-2 ; 701-1 ; 1000) selon l'une des revendications 1 à 2,
dans laquelle l'émetteur (1004) est configuré pour transmettre un signal par l'intermédiaire du canal sans fil à une autre station ;
dans laquelle le détecteur de CCA (103 ; 1003) est configuré en outre pour, lorsque le signal doit être transmis et sur la base du seuil de CCA, détecter si le canal est occupé ;
dans laquelle l'unité de commande (105 ; 1005) est configurée en outre pour, lorsque le canal sans fil est occupé et que le signal doit être transmis, augmenter le seuil de CCA ;
dans laquelle le détecteur de CCA (103 ; 1003) est configuré pour détecter à nouveau si le canal sans fil est occupé, sur la base du seuil de CCA augmenté ; et
dans laquelle l'émetteur (101 ; 1001) est configuré pour transmettre le signal, lorsque le canal sans fil n'est pas occupé.

4. Station (100 ; 501-2 ; 701-1 ; 1000) selon l'une des revendications 1 à 3,
dans laquelle le seuil de CCA indique une intensité de signal maximum pour des signaux qui peuvent être décodés par la station (100 ; 501-2 ; 701-1 ; 1000) mais qui ne sont pas adressés à la station, jusqu'à laquelle le canal sans fil est détecté comme étant libre ;
dans laquelle le détecteur de CCA (103 ; 1003) est configuré en outre pour détecter sur la base d'un seuil de CCA supplémentaire, que le canal sans fil est occupé, le seuil de CCA supplémentaire indiquant une intensité de signal maximum de n'importe quels signaux à l'intérieur du canal sans fil, jusqu'à laquelle le canal sans fil est détecté comme étant libre ; et
dans laquelle le détecteur de CCA (103 ; 1003) est configuré en outre pour régler le seuil de CCA supplémentaire.

5. Station (100 ; 501-2 ; 701-1 ; 1000) selon l'une des revendications 1 à 4,
dans laquelle la station (100 ; 501-2 ; 701-1 ; 1000) est un point d'accès.

6. Station (100 ; 501-2 ; 701-1 ; 1000) selon l'une des revendications précédentes 1 à 4, dans laquelle la station (100 ; 501-2 ; 701-1 ; 1000) est configurée pour fonctionner dans un mode de réseau sans fil ad hoc.

7. Station (100 ; 501-2 ; 701-1 ; 1000) selon l'une des revendications précédentes 1 à 4, dans laquelle la station (100 ; 501-2 ; 701-1 ; 1000) est configurée pour fonctionner dans un mode de réseau sans fil de type infrastructure.

8. Procédé (900) de fonctionnement d'une station (100 ; 501-2 ; 701-1 ; 1000), le procédé (900) comprenant :
- la réception (901) d'un signal sans fil envoyé par l'intermédiaire d'un canal sans fil ;
- la détection (902), sur la base d'un seuil de CCA, si le canal sans fil est occupé ;
- l'augmentation (903) du seuil de CCA et le réglage d'une puissance de transmission d'une transmission simultanée à une faible puissance de transmission lorsque le canal sans fil est occupé et que le signal reçu par l'intermédiaire du canal sans fil n'est pas destiné à la station (100 ; 501-2 ; 701-1 ; 1000) ;
la détermination d'une valeur d'interférence indiquant une intensité de signal d'interférence dans un environnement de la station et la détermination du canal sans fil comme étant occupé, lorsque la valeur d'interférence dépasse le seuil de CCA ; et le réglage d'un taux de codage et de modulation pour des signaux transmis en fonction de la valeur d'interférence déterminée.

9. Procédé (900) selon la revendication 8,
dans lequel la station (100 ; 501-2 ; 701-1 ; 1000) est un point d'accès.

10. Programme informatique comprenant un code de programme pour exécuter le procédé (900) selon l'une quelconque des revendications 8 ou 9, lorsque le programme informatique fonctionne sur un ordinateur.
